# EUROPÄISCHE PATENTSCHRIFT

(11) **EP 0 521 117 B1**
(45) Veröffentlichungstag und Bekanntmachung des Hinweises auf die Patenterteilung: **15.05.1996**
(21) Anmeldenummer: 92900840.7
(22) Anmeldetag: 18.12.1991
(51) Int. Cl.: F15C 5/00

(54) **MIKROVENTIL**
MICROVALVE
MICROSOUPAPE

(30) Priorität: 21.01.1991 DE 4101575
(43) Veröffentlichungstag der Anmeldung: 07.01.1993
(73) Patentinhaber: ROBERT BOSCH GMBH, 70442 Stuttgart (DE)
(72) Erfinder: GSCHWENDTNER, Horst, D-7300 Esslingen (DE); MAREK, Jiri, D-7410 Reutlingen 22 (DE); METTNER, Michael, D-7140 Ludwigsburg (DE); STOKMAIER, Gerhard, D-7145 Markgröningen (DE); GRAUER, Thomas, D-7000 Stuttgart 1 (DE)
(86) Internationale Anmeldenummer: DE9100987
(87) Internationale Veröffentlichungsnummer: WO9213200

(56) Entgegenhaltungen:
- EP-A- 0 339 528
- WO-A-90/06587

## Beschreibung

Die Erfindung geht aus von einem Mikroventil nach der Gattung des Hauptanspruchs.

Aus der EP 339 528 ist bereits ein Mikroventil mit einem piezoelektrischen Antrieb bekannt, bei dem ein Schließelement aus einer oberen Schicht und eine Durchgangsöffnung aus einer unteren Schicht herausstrukturiert sind. Das Schließelement kann durch ein piezoeletrisches Stellelement parallel zu den Schichten verschoben werden.

Aus der GB 21 55 152 A ist bereits ein Mikroventil bekannt, das in der aus der Halbleitertechnik bekannten Mehrschichtenstrukturtechnik hergestellt ist. Dieses mikromechanische Ventil weist im wesentlichen drei Schichten auf, von denen in einer Trägerschicht aus Silizium ein Einlaß und ein Auslaß sowie ein Ventilsitz ausgebildet sind. An die Trägerschicht schließen sich eine Zwischenschicht sowie an letztere eine äußere Deckschicht an, wobei diese Schichten einen die Druckmittelverbindung zwischen den beiden Anschlüssen herstellenden Raum formen. Bei diesem Mikroventil ist die Deckschicht zugleich als Membran ausgebildet, in die auch ein dem Ventilsitz zugeordnetes schließglied integriert ist. Außerdem ist auf der Membran eine elektrostatische Betätigungseinrichtung angeordnet, mittels derer das Ventil geöffnet werden kann, indem das Schließglied unter Verformung der Membran senkrecht zu den Schichtebenen ausgelenkt wird. Das schließen des Ventils erfolgt durch die Rückstellkraft der Membran, unter deren Einfluß sich das Schließglied wieder auf den Ventilsitz legt, wenn die Betätigungseinrichtung abgeschaltet wird. Die elektrostatische Betätigungseinrichtung muß also zusätzlich zu dem am Eingang anstehenden Druck des Fluids die Kräfte der federnden Membran überwinden. Die druckunausgeglichene Bauweise dieses Mikroventils erfordert aufwendige Betätigungseinrichtungen, da relativ große Stellkräfte notwendig sind.

### Vorteile der Erfindung

Das erfindungsgemäße Mikroventil mit den kennzeichnenden Merkmalen des Hauptanspruchs hat den Vorteil, daß mit relativ kleinen Stellbewegungen große Strömungsquerschnitte freigegeben werden können und damit große fluidische Volumens ströme gesteuert werden können.

Die Ausgestaltung des Zulaufs als eine erste Gitterstruktur und die Ausbildung des Schließelementes als eine zweite Gitterstruktur, die an Biegebalken aufgehängt ist, erweist sich als besonders vorteilhaft, da sich durch eine seitliche parallelogrammartige Verschiebung des schließelementes der Strömungsquerschnitt eines Fluides besonders einfach regeln läßt. Je nach Stellung der beiden Gitterstrukturen zueinander wird eine mehr oder weniger große Durchströmöffnung freigegeben.

Vorteilhaft ist auch, daß die struktur des Mikroventils mit in der Mikromechanik standardmäßigen Verfahren herstellbar ist, was eine kostengünstige Massenfertigung ermöglicht. Das erfindungsgemäße Mikroventil läßt sich beispielsweise vorteilhaft bei der Benzineinspritzung anwenden.

Durch die in den unteransprüchen aufgeführten Maßnahmen sind vorteilhafte Weiterbildungen des im Hauptanspruch angegebenen Mikroventils möglich.

Von Vorteil ist es, wenn die den Zulauf bildende erste Gitterstruktur und die das Schließelement bildende zweite Gitterstruktur gleichartig sind, das heißt, dieselbe Maschengröße aufweisen. Um in geschlossener Stellug des Ventils den Leckfluß zu begrenzen, ist es vorteilhaft, die Überdeckung der Gitterstrukturen positiv zu wählen, so daß die Gitterbalken des Schließelementes die Maschen des Zuflusses in Geschlossenstellung vollständig überdecken.

Um ein möglichst dichtes Schließen der Ventile zu Erreichen, ist es günstig, wenn Mittel zum Anlegen einer Spannung zwischen Teilen der ersten Schicht und Teilen der zweiten Schicht des Mikroventils vorhanden sind, so daß das Schließelement elektrostatisch gegen den Zulauf drückbar ist.

Die Betätigung des Schließelementes kann vorteilhaft piezoelektrisch erfolgen. Dies läßt sich vorteilhaft durch ansteuerbare Piezoelemente realisieren, die mit dem schließelement über Hebelarme verbunden sind, so daß eine Ausdehnungsänderung eines Piezoelementes eine Auslenkung des Schließelementes bewirkt. Die Betätigung des Schließelementes kann auch vorteilhaft mittels eines elektrostatischen Fingerantriebes erfolgen. Dazu ist in der zweiten Schicht ausgehend von dem schließelement mindestens eine erste kammförmige Lamellenstruktur ausgebildet. Eine zweite ebenfalls in der zweiten Schicht ausgebildete kammförmige Lamellenstruktur ist so angeordnet, daß die Lamellen der ersten und der zweiten Lamellenstrukturen ineinander greifen. Das Anlegen einer Spannung zwischen den beiden Lamellenstrukturen stellt eine einfache Möglichkeit dar, das schließelement zu betätigen. Um möglichst große Stellkräfte zu erzielen, ist es besonders günstig, die Lamellenstrukturen in der gesamten Dicke der zweiten Schicht auszubilden.

Ein mögliches Fertigungsverfahren für das erfindungsgemäße Mikroventil ist die unter der Bezeichnung "LIGA" bekannte Prozeßfolge. Besonders günstig läßt sich das erfindungsgemäße Mikroventil aus monokristallinen Siliziumwafern mit vorzugsweise (100)-Kristallorientierung oder (110)-Kristallorientierung durch anisotropes, naßchemisches Ätzen oder elektrochemisches Trockenätzen strukturieren, da diese Techniken aus der Mikromechanik bekannt und gut handhabbar sind. Der Mehrschichtenaufbau des Mikroventils kann vorteilhaft durch Aufeinanderbonden von mehreren Wafern über eine Hilfsschicht, vorzugsweise eine Siliziumoxidschicht, erfolgen. Ein besonderer Vorteil bei Verwendung einer Hilfsschicht besteht darin, daß sich der für die Bewegung des Schließelementes erforderliche Spalt zwischen der ersten und der zweiten Schicht im Bereich des Schließelementes sehr einfach durch Entfernen der Hilfsschicht erzeugen läßt. Die Funktionsfähigkeit des erfindungsgemäßen Mikroventils hängt entscheidend von einer genauen Justierung der Schichten gegeneinander ab. Eine besonders vorteilhafte Realisierungsmöglichkeit zur Justierung von zwei Siliziumwafern als erste und zweite schicht des Mikroventils besteht im Einbringen von Vertiefungen und sockelartigen Erhebungen in die einander zugewandten Oberflächen der Siliziumwafer an komplementären Stellen. Sowohl die Vertiefungen als auch die Erhebungen haben einen festen geometrischen Bezug zu den Durchgangsöffnungen des Zuflusses und des Schließelementes. Beim Bonden der Wafer gegeneinander dienen die Vertiefungen und Erhebungen als mechanische Justierhilfen, durch die gewährleistet wird, daß die Schlitze des Zuflusses und der zweiten Schicht im Bereich des Schließelementes justiert übereinander zu liegen kommen. Sowohl die Vertiefungen als auch die Erhebungen können vorteilhaft durch einen Ätzprozeß erzeugt werden, indem im Falle der Vertiefungen Ausnehmungen eingeätzt werden und im Falle der Erhebungen das umliegende Silizium entfernt wird.

Um ein dichtes Schließen des Ventils zu erreichen oder auch um den Leckfluß zu begrenzen, ist es vorteilhaft, als zweite Schicht einen Siliziumwafer zu verwenden, dessen Kristallorientierung um einen geringen Fehlwinkel von der (110)-Orientierung abweicht, und diesen durch anisotropes naßchemisches Ätzen zu strukturieren. Die sich dabei ausbildenden Biegebalken, mit denen das Schließelement mit der zweiten Schicht verbunden ist, haben eine Hauptträgheitsachse, die leicht von der Orientierung der Oberflächen des Wafers abweicht, so daß das Schließelement nicht nur lateral sondern auch in Richtung senkrecht zu den Waferoberflächen ausgelenkt wird, wenn eine Kraft parallel zu den Waferoberflächen ausgeübt wird. Dadurch wird erreicht, daß bei Betätigung des Schließelementes auch der zur Bewegung des Schließelementes notwendige Spalt zwischen der ersten und der zweiten Schicht kompensiert wird.

### Zeichnung

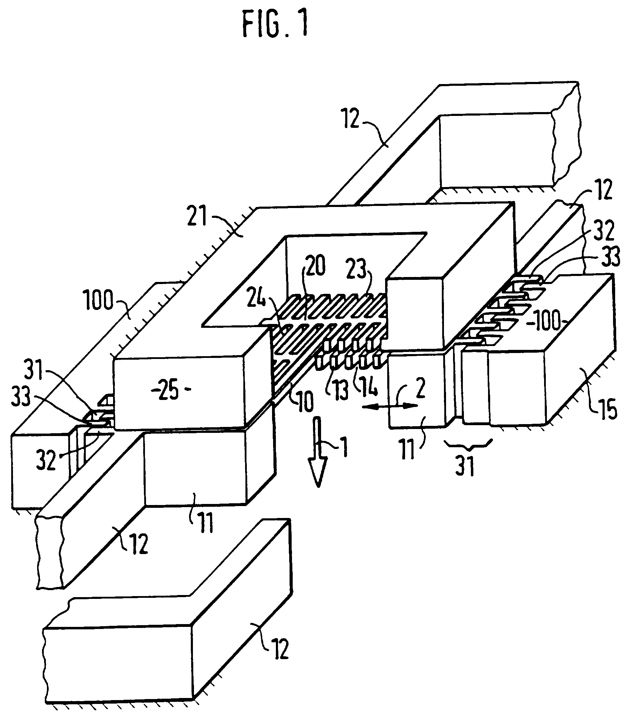

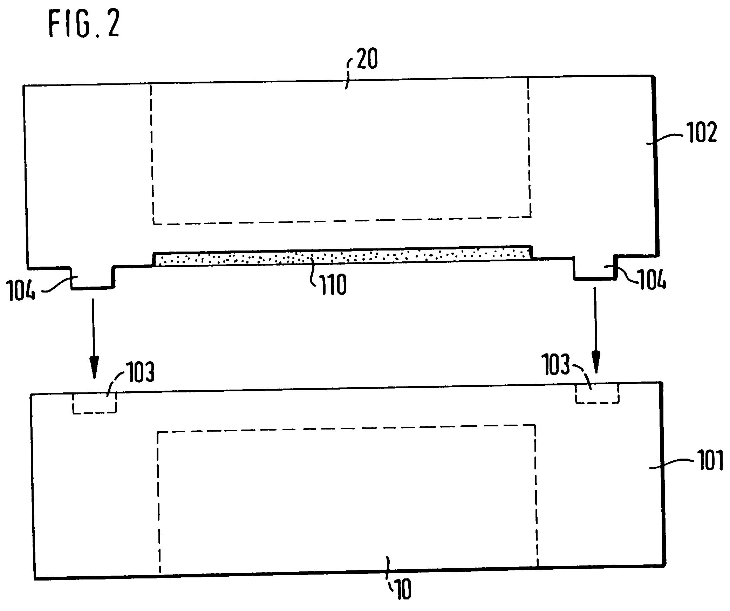

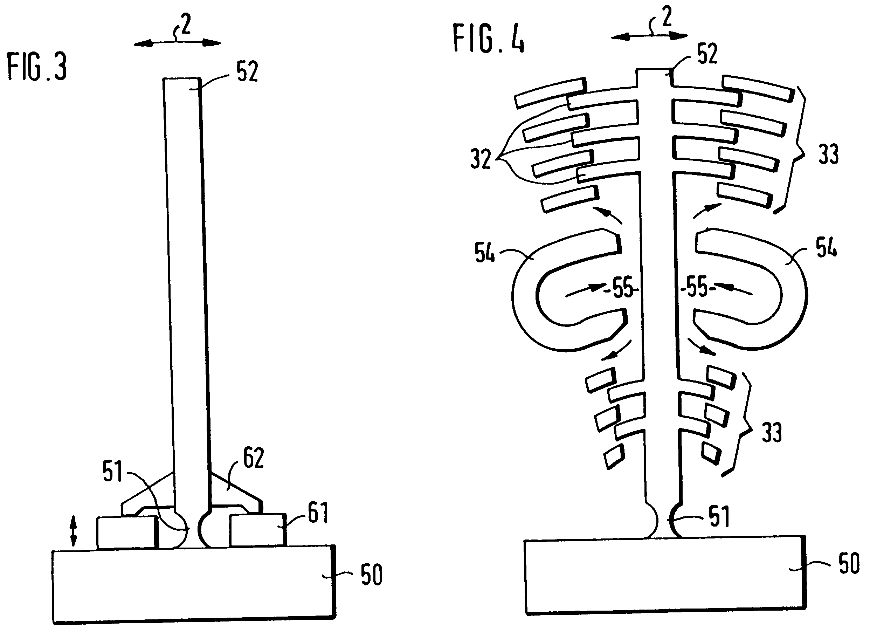

Ausführungsbeispiele der Erfindung sind in der Zeichnung dargestellt und in der nachfolgenden Beschreibung näher erläutert. Es zeigen Figur 1 Ausschnitte eines erfindungsgemäßen mikromechanischen Längsschieberventils im Schichtaufbau, Figur 2 einen schematischen Querschnitt zum justierten Aufbau des erfindungsgemäßen Mikroventils, Figur 3 einen piezoelektrischen Antrieb und Figur 4 ein weiteres Beispiel für einen elektrostatischen Antrieb, wobei die in den Figuren 3 und 4 gezeigten Schließelemente im Sinne der Patentansprüche nicht erfindungsgemäß sind. Beschreibung des Ausführungsbeispiels

In Figur 1 sind Ausschnitte eines schichtweise aufgebauten Mikroventils mit einem zulauf und einem Schließelement dargestellt. Mit dem Pfeil 1 ist die Durchströmrichtung des zu schaltenden bzw. zu steuernden Fluidstromes angedeutet. Der Pfeil 2 symbolisiert die Verschiebungsrichtung des Schließelements. Der Aufbau des Mikroventils weist im wesentlichen eine erste schicht 25 und eine darauf aufgebrachte zweite Schicht 15 auf. In der ersten Schicht 25 ist eine feststehende Gitterstruktur 20 mit Gitterbalken 23, die Maschen 24 bilden, in einem Rahmen 21 strukturiert. In der zweiten Schicht 15 ist eine zweite Gitterstruktur 10, die ebenfalls Gitterbalken 13 und Maschen 14 aufweist, analog zu der ersten Gitterstruktur 20 ausgebildet. Der Rahmen 11 der zweiten Gitterstruktur 10 ist über Biegebalken 12 mit der zweiten schicht 15 verbunden. Die Biegebalken 12 sind wesentlich schmaler als hoch ausgebildet, so daß eine Verbiegung in lateraler Richtung 2 gegenüber einer Verbiegung senkrecht zu den Schichtebenen bevorzugt auftritt. Im Bereich der Gitterstrukturen 10, 20, der Rahmen 11, 21 und der Biegebalken 12 besteht ein feiner spalt zwischen der ersten Schicht 25 und der zweiten Schicht 15. Dadurch kann die das schließelement bildende zweite Gitterstruktur 10 im Rahmen 11 lateral, d. h., parallel zu den das Mikroventil bildenden schichten 15 und 25, ausgelenkt werden, wodurch die Größe der Durchströmöffnung, die von den sich überlappenden Maschen 14, 24 der ersten und der zweiten Gitterstruktur 10, 20 gebildet wird, verändert werden kann. Die erste Gitterstruktur 20 dient als zulauf, die zweite Gitterstruktur 10 als Schließelement und Auslaß des Mikroventils. Der Zufluß des Ventils ist vom Auslaß des Ventils getrennt. Bei dem in Figur 1 dargestellten Ausführungsbeispiel erfolgt die Betätigung des Schließelementes über ineinandergreifende kammförmige Lamellenstrukturen 32 und 33, zwischen denen eine Spannung angelegt werden kann. Eine der ineinandergreifenden kammförmigen Lamellenstrukturen 32 geht von dem Rahmen 11 der das Schließelement bildenden Gitterstruktur 10 aus. Die andere kammförmige Lamellenstruktur 33 geht von dem feststehenden Teil der zweiten Schicht 15 aus. Beim Anlegen einer Spannung zwischen den Lamellenstrukturen 32 und 33 wirkt eine Kraft auf das Schließelement, die eine Auslenkung parallel zur zweiten schicht 15 unter Verbiegung der Biegebalken 12 bewirkt.

Die Ausgestaltung der ersten Gitterstruktur 20, die den Zulauf des Ventils bildet, und die Ausgestaltung der zweiten Gitterstruktur 10, die das Schließelement des Mikroventils bildet, können auf die Funktion des Mikroventils als Schalt- oder Steuerventil abgestimmt sein. Um den Leckfluß des Mikroventils so gering wie möglich zu halten, ist es sinnvoll, die Gitterstrukturen 10 und 20 so in den Rahmen 11 und 21 anzuordnen, daß die Gitterbalken 13 und 23 parallel bzw. parallel und senkrecht zu der durch den Pfeil 2 gekennzeichneten Auslenkungsrichtung des Schließelementes orientiert sind. Haben die erste Gitterstruktur 20 und die zweite Gitterstruktur 10 dieselbe Maschengröße, so ist die Variationsmöglichkeit der Durchströmöffnung des Mikroventils am größten. Soll das Mikroventil möglichst dicht verschließbar sein, so wird die Breite der Gitterbalken 13 des Schließelementes möglichst größer als die Maschen 24 des Zulaufs gewählt. Im Rahmen der Erfindung liegen aber auch andere gitterartige Strukturen und deren Kombinationen, die den Zulauf und das Schließelement bilden.

Die den elektrostatischen Fingerantrieb 31 bildenden kammförmigen, ineinandergreifenden Lamellenstrukturen 32 und 33 können sowohl am Schließelement selbst, wie in diesem Beispiel am Rahmen 11 der zweiten Gitterstruktur 10, oder an den die Aufhängung bildenden Biegebalken 12 angeordnet sein. Es ist besonders günstig die kammartigen Lamellenstrukturen 32, 33 in der vollen Schichtdicke der zweiten Schicht 15 auszubilden, da bei gleichen lateralen Abmessungen der Lamellenstrukturen und gleichen elektrischen Feldern bei größerer Strukturhöhe der Lamellenstrukturen größere Kräfte erzeugt werden können.

Das in Figur 1 dargestellte Mikroventil läßt sich vorteilhaft in monokristallinen Siliziumwafern mit vorzugsweise (100)-Kristallorientierung oder (110)-Kristallorientierung realisieren. In Wafern mit (110)-Kristallorientierung lassen sich einfach durch anisotropes Ätzen Strukturen mit großer Tiefe und Seitenwänden senkrecht zu den Waferoberflächen erzeugen, was für die hier beschriebenen Mikroventile besonders günstig ist. Siliziumwafer mit (100)-Kristallorientierung können durch anisotropes Ätzen oder elektrochemisches Trockenätzen strukturiert werden, wobei bei letzterem nur kleinere Strukturtiefen erzielt werden. Als Herstellungsverfahren für die hier beschriebenen Mikroventile kommen aber auch die Liga-Technologie oder ähnliche Abformtechniken in Frage, bei denen andere Materialien als Silizium verwendet werden können. Der schichtweise Aufbau und die Ausgestaltung von zu den Schichtoberflächen senkrechten Durchgangslöchern eignet sich besonders für die Anwendung von Abformtechniken bei der Herstellung.

Die Verwendung von (110)-Siliziumwafern und deren Strukturierung durch anisotropes Ätzen eignen sich besonders zur Herstellung von Lamellenstrukturen mit großer Strukturhöhe, wie sie beim elektrostatischen Fingerantrieb verwendet werden.

Die Verwirklichung des in Figur 1 dargestellten Schichtaufbaus eines Mikroventils erfordert eine sehr genaue Justierung der die beiden Schichten bildenden Wafer gegeneinander, um unerwünschte Überlappungen der Gitterstrukturen 10, 20 und zu große Leckraten zu vermeiden. Als Justierhilfe können, wie in Figur 2 dargestellt, in einen ersten Wafer 101 an bestimmten Stellen Ausnehmungen 103 eingeätzt werden. Diese Vertiefungen haben einen festen geometrischen Bezug zu den Durchgangsöffnungen, die den Zulauf bilden oder im Bereich des Schließelments strukturiert sind. Diese Bereiche sind in Figur 2 entsprechend Figur 1 mit 10 und 20 bezeichnet. Der zweite Wafer 102 des Schichtaufbaus besitzt Erhebungen 104 an den zu den Ausnehmungen 103 im Wafer 101 komplementären Stellen. Diese Erhebungen 104 werden wiederum durch einen Ätzprozeß hergestellt, wobei das umliegende Silizium entfernt wird. Auch die im zweiten Wafer 102 ausgebildeten Durchgangsöffnungen haben einen festen geometrischen Bezug zu den Erhebungen 104. Beim Bonden der Wafer 101 und 102 dienen die Vertiefungen 103 und die Erhebungen 104 als mechanische Justierhilfen. Dadurch ist gewährleistet, daß die Durchgangsöffnungen des Zulaufs und im Bereich des Schließelementes genau justiert übereinander zum liegen kommen. Neben der in Figur 1 dargestellten Variante ist es auch möglich, in einen Wafer sockelartige Erhebungen 104 und Ausnehmungen 103 einzubringen und in den anderen Wafer komplementäre Ausnehmungen 103 und sockelartige Erhebungen 104. Die Ausnehmungen 103 und sockelartigen Erhebungen 104 sind an nicht beweglichen Teilen des Mikroventils angeordnet, zum Beispiel in den in Figur 1 mit 100 bezeichneten Bereichen. Dadurch wird die Beweglichkeit des Schließelements gewährleistet. In Figur 2 ist mit 110 eine siliziumoxidschicht in den Bereichen der Gitterstrukturen 10 bzw. 20 angeordnet. Diese Oxidschicht 110 dient als Hilfsschicht beim Gegeneinanderbonden der Wafer 101 und 102. Durch Entfernen der Hilfsschicht 110 in den Bereichen des Schließelementes und der Biegebalken nach dem Aufeinanderbonden der Wafer 101 und 102 entsteht ein feiner Spalt zwischen den beiden Schichten, die durch die Wafer 101, 102 gebildet werden, der zur Auslenkung des Schließelementes parallel zu den Schichten erforderlich ist.

Ein dichtes Schließen des Mikroventils kann also wegen des Spalts zwischen der ersten Schicht 25 und der zweiten Schicht 15 auch in einer Gitterstellung, bei der die Maschen 14 und 24 vollständig von Gitterbalken 13 und 23 überlappt werden, nur durch eine Spaltkompensation erreicht werden. Eine Möglichkeit stellt die elektrostatische Spaltkompensation dar, dazu muß zwischen der ersten Schicht 25 und der zweiten Schicht 15 eine Spannung angelegt werden, so daß sich die beiden Gitterstrukturen 10 und 20 anziehen. Eine Spaltkompensation ist aber auch möglich, wenn die zweite Schicht, in der das Schließelement ausgebildet ist, durch einen Siliziumwafer gebildet wird, dessen Kristallorientierung einen leichten Fehlwinkel gegen die (110)-Kristallorientierung aufweist. Beim anisotropen Ätzen der Gitterstruktur 10, des Rahmens 11 und der Biegebalken 12 bilden sich dann Biegebalken 12 aus, die eine Hauptträgheitsachse aufweisen, deren Orientierung leicht von der Orientierung der Oberflächen des die zweite Schicht 15 bildenden Siliziumwafers abweichen. Wird beispielsweise über den elektrostatischen Fingerantrieb eine Kraft parallel zur Waferoberfläche auf das Schließelement ausgeübt, so führt die spezielle Ausgestaltung der Biegebalken 12 immer auch zu einer minimalen Auslenkung senkrecht zu den Waferoberflächen, die aber ausreicht, um den Spalt zwischen der ersten Schicht 25 und der zweiten Schicht 15 zu kompensieren.

In Figur 3 ist ein Schließelement für ein mikromechanisches Drehschieberventil dargestellt. Es weist einen Balken 52 auf, der von einem feststehenden Sockel 50 ausgeht. Im Bereich 51 seines Fußpunktes ist der Balken 52 in seiner Dicke reduziert, so daß er bevorzugt eine Bewegung um diesen Bereich 51 ausführt, was durch den Pfeil 2 dargestellt ist. Der Balken dient zur Überdeckung von einer oder mehreren Durchgangsöffnungen in einer ersten Schicht 25, die hier nicht dargestellt ist. Die Funktionsweise des Mikroventils entspricht ebenfalls dem in Figur 1 dargestellten, nur daß das Schließelement in diesem Beispiel keine parallelogrammartige laterale Verschiebung ausführt, sondern eine teilweise Drehbewegung um den Fußpunkt des Balkens 52. Zum Betätigen des Schließelementes sind Piezoelemente 61 beidseitig um den Fußpunkt des Balkens 52 auf dem Sockel 50 angeordnet. Die Piezoelemente 61 sind über Hebelarme 62 mit dem Balken 52 verbunden, so daß eine Ausdehnungsänderung der Piezoelemente 61 zu einer Auslenkung des Balkens 52 führt. Je nachdem, welches Piezoelement angesteuert wird bzw. in welcher Form es angesteuert wird, läßt sich der Balken 52 in der Schichtebene bewegen.

In Figur 4 ist eine weitere Ausführungsform eines Schließelementes für ein Drehschieberventil dargestellt. Wie bei dem in Figur 3 dargestellten Ausführungsbeispiel besteht das Schließelement aus einem Balken 52, der einseitig mit einem Sockel 50 über einen Fußpunkt verbunden ist und der im Bereich des Fußpunktes in seiner Dicke reduziert ist, so daß das Schließelement eine teilweise Drehbewegung um den Fußpunkt ausüben kann. Der Antrieb der Auslenkung des Balkens 52 erfolgt hier über einen elektrostatischen Fingerantrieb, der durch von dem Balken 52 ausgehende Lamellen 32 und diesen gegenüber angeordneten Lamellen 33 gebildet wird. Genau wie in dem in Figur 1 dargestellten Ausführungsbeispiel greifen die Fingerstrukturen 32 und 33 je nach zwischen den Fingerstrukturen 32 und 33 angelegter Spannung mehr oder weniger ineinander.

Seitlich von dem Balken 52 im Bereich der den Zulauf bildenen Durchgangsöffnungen in einer ersten Schicht des Mikroventilaufbaus, die hier nicht dargestellt ist, sind jeweils eine düsenartige Umrandung 54 angeordnet mit jeweils einer dem Balken 52 zugewandten Düsenöffnung 55. Der Öffnungsgrad der Düsenöffnungen 55 ist je nach Stellung des Balkens 52 veränderbar, so daß wahlweise eine der beiden rechts und links von dem Balken 52 angeordneten Düsenöffnungen 55 geöffnet bzw. geschlossen werden kann. Bei diesem Mikroventil strömt das Fluid durch den zulauf in die düsenartigen Umrandungen 54 in der zweiten Schicht 15 des Mikroventils ein und wird durch die Düsenöffnungen 55 entsprechend den Pfeilen in Figur 4 nach außen geleitet. Die Realisierung dieses Mikroventils erfordert eine obere Abdeckung für die zweite Schicht 15.

Das in Figur 4 dargestellte Mikroventil kann ebenso über Piezoelemente wie sie in Figur 3 dargestellt sind, angetrieben werden.

## Patentansprüche

1. Mikroventil in Mehrschichtenstruktur zum Schalten oder Steuern von Fluidströmen mit einem Zulauf und einem Schließelement, das durch insbesondere elektrische Betätigungsmittel auslenkbar ist, wobei der Zulauf in einer Schicht als mindestens eine erste Durchgangsöffnung ausgebildet ist und das Schließelement aus einer zweiten Schicht (15) strukturiert ist, die auf die erste Schicht aufgebracht ist,
- wobei die zweite Schicht (15) im Bereich des Schließelements mindestens eine weitere Durchgangsöffnung aufweist,
- wobei das Schließelement im wesentlichen parallel zu der ersten Schicht (25) und der zweiten Schicht (15) verschiebbar ist, so daß in mindestens einer ersten Stellung des Schließelement die mindestens eine Durchgangsöffnung des Zulaufs zusammen mit der mindestens einen weiteren Durchgangsöffnung in der zweiten Schicht (15) mindestens eine Durchströmöffnung bildet,
- und wobei der Querschnitt der mindestens einen Durchströmöffnung durch Betätigen des Schließelements veränderbar ist,
dadurch gekennzeichnet,
- daß der Zulauf als eine erste Gitterstruktur (20) mit Gitterbalken (23) und Maschen (24) ausgebildet ist,
- daß die weitere Durchgangsöffnung des Schließelements als eine zweite Gitterstruktur (10) mit Gitterbalken (13) und Maschen (14) ausgebildet ist,
- und daß die Gitterbalken (13, 23) beider Gitterstrukturen senkrecht zur Bewegungsrichtung des Schließelements orientiert sind.

2. Mikroventil nach Anspruch 1, dadurch gekennzeichnet,
- daß die erste Gitterstruktur (20) und die zweite Gitterstruktur (10) dieselbe Maschengröße aufweisen.

3. Mikroventil nach Anspruch 1 oder 2, dadurch gekennzeichnet,
- daß die Maschengröße und die Breite der Gitterbalken (23, 13) so gewählt sind, daß die Gitterbalken (13) der zweiten Gitterstruktur (10) die Maschen (24) der ersten Gitterstruktur (20) in mindestens einer zweiten Stellung des Schließelementes vollständig überdecken.

4. Mikroventil nach einem der vorhergehenden Ansprüche, dadurch gekennzeichnet, daß das Schließelement mittels Biegebalken (12) mit der zweiten Schicht (15) verbunden ist.

5. Mikroventil nach einem der vorhergehenden Ansprüche, dadurch gekennzeichnet, daß Mittel zum Anlegen einer Spannung zwischen Teilen der ersten Schicht (25) und Teilen der zweiten Schicht (15) vorhanden sind, so daß das Schließelement elektrostatisch gegen den Zulauf drückbar ist.

6. Mikroventil nach einem der vorhergehenden Ansprüche, dadurch gekennzeichnet, daß das Schließelement über mindestens einen Hebelarm (62) mit mindestens einem ansteuerbaren Piezoelement (61) verbunden ist, so daß eine Ausdehnungsänderung des mindestens einen Piezoelementes (61) eine Auslenkung des Schließelementes bewirkt.

7. Mikroventil nach einem der Ansprüche 1 bis 5, dadurch gekennzeichnet, daß in der zweiten Schicht (15) vom Schließelement ausgehend mindestens eine erste kammförmige Lamellenstruktur (32) ausgebildet ist, daß in der zweiten Schicht (15) mindestens eine zweite kammförmige Lamellenstruktur (33) ausgebildet ist, die so angeordnet ist, daß die Lamellen der ersten Lamellenstruktur (32) und die Lamellen der zweiten Lamellenstruktur (33) ineinandergreifen, und daß Mittel vorhanden sind zum Anlegen einer Spannung zwischen der ersten Lamellenstruktur (32) und der zweiten Lamellenstruktur (33).

8. Mikroventil nach Anspruch 7, dadurch gekennzeichnet, daß die erste Lamellenstruktur (32) und die zweite Lamellenstruktur (33) in der gesamten Dicke der zweiten Schicht (15) ausgebildet sind.

## Claims

1. Microvalve with multilayer structure for switching or controlling fluid flows, having an inlet and a shut-off component which can be displaced, in particular by electrical actuation means, the inlet being designed in one layer as at least a first through-opening and the shut-off component being structured from a second layer (15), which is applied onto the first layer,
- the second layer (15) having at least one other through-opening in the region of the shut-off component,
- the shut-off component being movable essentially parallel to the first layer (25) and to the second layer (15), so that in at least one first position of the shut-off component, the at least one through-opening of the inlet forms, together with the at least one other through-opening in the second layer (15), at least one through-flow opening,
- and the cross-section of the at least one through-opening being variable by actuating the shut-off component,
characterized
- in that the inlet is designed as a first lattice structure (20) having lattice bars (23) and meshes (24),
- in that the further through-opening of the shut-off component is designed as a second lattice structure (10) having lattice bars (13) and meshes (14),
- and in that the lattice bars (13, 23) of both lattice structures are oriented perpendicularly to the direction of movement of the shut-off component.

2. Microvalve according to Claim 1, characterized
- in that the first lattice structure (20) and the second lattice structure (10) have the same mesh size.

3. Microvalve according to Claim 1 or 2, characterized
- in that the mesh size and the width of the lattice bars (23, 13) are selected in such a way that the lattice bars (13) of the second lattice structure (10) fully cover the meshes (24) of the first lattice structure (20) in at least one second position of the shut-off component.

4. Microvalve according to one of the preceding claims, characterized in that the shut-off component is connected to the second layer (15) by means of flexural bars (12).

5. Microvalve according to one of the preceding claims, characterized in that means are present for applying a voltage between parts of the first layer (25) and parts of the second layer (15), so that the shut-off component can be electrostatically pressed against the inlet.

6. Microvalve according to one of the preceding claims, characterized in that the shut-off component is connected via at least one lever arm (62) to at least one controllable piezoelectric element (61), so that a change in the expansion of the at least one piezoelectric element (61) causes displacement of the shut-off component.

7. Microvalve according to one of Claims 1 to 5, characterized in that at least one first comb-like rib structure (32) is formed in the second layer (15), starting from the shut-off component, in that at least one second comb-like rib structure (33) is formed in the second layer (15) and is arranged in such a way that the ribs of the first rib structure (32) and the ribs of the second rib structure (33) interlock, and in that means are present for applying a voltage between the first rib structure (32) and the second rib structure (33).

8. Microvalve according to Claim 7, characterized in that the first rib structure (32) and the second rib structure (33) are formed in the entire thickness of the second layer (15).

## Revendications

1. Microsoupape pour une structure à plusieurs couches servant à commuter et commander des fluides, comprenant une entrée et un élément de fermeture qui peut être dévié notamment par un moyen de commande électrique, l'entrée dans une couche étant réalisée au moins comme un premier orifice de passage et l'élément de fermeture étant formé à partir d'une seconde couche (15) appliquée sur la première couche,
- la seconde couche (15) comporte, au niveau de l'élément de fermeture, au moins un autre passage traversant,
- l'élément de fermeture peut coulisser essentiellement de manière parallèle à la première couche (25) et à la seconde couche (15), de sorte que, dans au moins une première position de l'élément de fermeture, au moins un orifice de passage de l'entrée avec au moins un autre orifice de passage de la seconde couche (15), forment au moins un orifice de passage traversant,
- et la section d'au moins un orifice de passage peut être modifiée par la commande de l'élément de fermeture,
caractérisé en ce que :
- l'entrée est réalisée sous la forme d'une première structure à grille (20) avec des barrettes de grille (23) et des mailles (24),
- l'autre orifice de passage de l'élément de fermeture est réalisé comme une seconde structure à grille (10) avec des barrettes de grille (13) et des mailles (14),
- et en ce que les barrettes de grille (13, 23) des deux structures de grille sont orientées perpendiculairement à la direction de déplacement de l'élément de fermeture.

2. Microsoupape selon la revendication 1, caractérisée en ce que la première structure de grille (20) et la seconde structure de grille (10) ont la même dimension de mailles.

3. Microsoupape selon la revendication 1 ou 2, caractérisée en ce que :
- les dimensions des mailles et la largeur des barrettes de grille (23, 13) sont choisies pour que les barrettes de grille (13) de la seconde structure de grille (10) recouvrent complètement les mailles (24) de la première structure de grille (20) au moins lorsque l'élément de fermeture se trouve dans sa seconde position.

4. Microsoupape selon l'une des revendications précédentes, caractérisée en ce que l'élément de fermeture est relié par une traverse de flexion (12) à la seconde couche (15).

5. Microsoupape selon l'une des revendications précédentes, caractérisée par des moyens pour appliquer une tension entre des parties de la première couche (25) et des parties de la seconde couche (15) de façon que l'élément de fermeture puisse être poussé électrostatiquement contre l'entrée.

6. Microsoupape selon l'une des revendications précédentes, caractérisée en ce que l'élément de fermeture est relié par au moins un bras de levier (62) à au moins un élément piézo-électrique commandé (61) pour qu'une variation de tension sur au moins un élément piézo-électrique (61) produise un débattement de l'élément de fermeture.

7. Microsoupape selon l'une des revendications 1 à 5, caractérisée en ce qu'au moins une première structure à lamelles (32) en forme de peigne est réalisée dans la seconde couche (15) en partant de l'élément de fermeture, et au moins une seconde structure à lamelles en forme de peigne (33) est réalisée dans la seconde couche (15), de façon que les lamelles de la première structure à lamelles (32) et les lamelles de la seconde structure à lamelles (33) s'interpénètrent, des moyens étant prévus pour appliquer une tension entre la première structure à lamelles (32) et la seconde structure à lamelles (33).

8. Microsoupape selon la revendication 7, caractérisée en ce que la première structure à lamelles (32) et la seconde structure à lamelles (33) sont réalisées dans toute l'épaisseur de la seconde couche (15).
